# EUROPÄISCHE PATENTANMELDUNG

(11) **EP 1 043 536 A1**
(43) Veröffentlichungstag der Anmeldung: **11.10.2000**
(21) Anmeldenummer: 99810276.8
(22) Anmeldetag: 31.03.1999
(51) Int. Cl.: F16L 21/08, F16L 47/06

(54) **Vorrichtung zur Verbindung von Rohrstücken**

(71) Anmelder: Haener Machinery Ltd, 4147 Aesch (CH)
(72) Erfinder: Haener, Gottfried, 4222 Zwingen (CH)
(74) Vertreter: Braun, André, jr.

(57) **Zusammenfassung**

Die Rohrverbindung besteht im wesentlichen aus einer die Rohrstücke umfassenden Muffe (3) mit einem Mittelteil (9) und zwei beidseitig angrenzenden Bereichen (11), wobei die angrenzenden Bereiche (11) einen die Rohrstücke umgebenden Ringspalt vorsehen, in dem von der Mitte zu den Enden (16) hin zwei hintereinander liegende O-Ring/Pressring-Kombinationen (4,5;6,7) und ein aussen anschliessender Spreizring (8) angeordnet sind.

## Beschreibung

Die Erfindung betrifft eine Vorrichtung zur Verbindung von Rohrstücken mit einer die beiden Enden der Rohrstücke umfassenden Muffe.

Zur Verbindung von Rohrstücken werden heute zunehmend Pressverbindungsvorrichtungen eingesetzt, bei denen die Rohrenden und die Verbindungsvorrichtungen durch Kaltverformung mittels Pressungen zu einer formschlüssigen Verbindung verpresst werden.

Eine solche Verbindungsvorrichtung ist beispielsweise in der EP 0 159 997 beschrieben. Diese Pressverbindungsvorrichtung besteht aus einer inneren Hülse, welche in die beiden Rohrenden eingesteckt wird, zwei äusseren Hülsen, welche auf die Rohrenden aufgeschoben werden, und zwei Pressringen. Ein Nachteil dieser Verbindungsvorrichtung besteht darin, dass sie aus fünf losen Teilen besteht und sowohl ihre Herstellung als auch ihre Montage somit kompliziert und teuer sind.

Angesichts dieser und weiterer Nachteile der bekannten Verbindungsvorrichtungen liegt der Erfindung die Aufgabe zugrunde, eine Vorrichtung zur Pressverbindung von Rohrstücken zu schaffen, welche einfacher aufgebaut und zu montieren ist und die eine dichte und sichere Rohrverbindung gewährleistet.

Diese Aufgabe wird mit Hilfe der kennzeichnenden Merkmale des Patentanspruchs 1 gelöst.

Im folgenden werden anhand der beiliegenden Zeichnungen bevorzugte Ausführungsbeispiele der Erfindung beschrieben. Es zeigen:
- Fig. 1: eine Schnittdarstellung einer Rohrverbindungsvorrichtung und
- Fig. 2: eine Schnittdarstellung einer alternativen Form einer Rohrverbindungsvorrichtung.

Die in den Figuren im Schnitt gezeigten Rohrverbindungsvorrichtungen verbinden jeweils zwei Rohre 1, 2 gleichen Querschnitts koaxial miteinander. Auf der linken Seite der Figuren ist jeweils der unverpresste Zustand, auf der rechten Seite der verpresste Endzustand gezeigt.

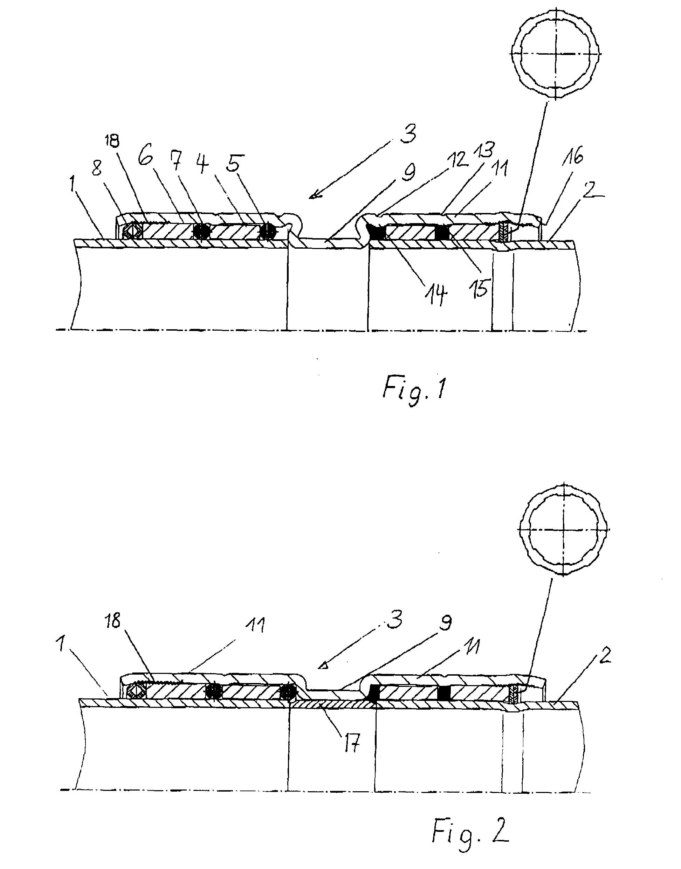

Die in Fig. 1 gezeigte Vorrichtung besteht aus einer Verbindungsmuffe 3, in welche die Rohrenden von beiden Seiten hineingesteckt werden, je zwei beiderseits der Mitte im Inneren der Muffe angeordneten Pressringen 4, 6 mit jeweils innerhalb der Pressringe angeordneten O-Ringen 5,7 sowie je einem ebenfalls im Inneren der Muffe in deren Endbereich angeordneten Spreizring 8.

Die Muffe 3 ist im wesentlichen ein hohlzylindrisches Rohrstück mit einem mittleren Bereich 9 und zwei beidseitig an den mittleren Bereich angrenzenden Bereichen 11. Der mittlere Bereich 9 der Muffe besteht in einer Art Einschnürung und hat genau den gleichen Innendurchmesser wie die zu verbindenden Rohrstücke. Die beiden angrenzenden Bereiche 11 besitzen einen Innendurchmesser, der zwischen ihrer Innenfläche und der Aussenfläche der Rohrenden einen Ringspalt belässt, in dem die Press- und O-Ringe sowie die Spreizringe angeordnet sind. Die Muffe 3 wird vorzugsweise aus einem Rohrabschnitt hergestellt, der kalt verformt, beispielsweise gewalzt ist. Zur Herstellung der Form der den Mittelbereich 9 bildenden Einschnürung wird das Rohrstück nach dem Walzen axial gestaucht.

Die nach beiden Seiten an den Mittelbereich 9 angrenzenden Bereiche 11 besitzen unmittelbar in der Nähe des Übergangs eine flache Einschnürung 12 und etwa halbwegs zwischen Mittelbereich 9 und den stirnseitigen Enden 16 der Muffe eine weitere flache Einschnürung 13. Beide Einschnürungen 12 und 13 bilden an der Innenfläche der Muffe umlaufende, nach innen gerichtete Wülste 14, 15, wobei der näher zur Mitte befindliche Wulst 14 einen engeren Innendurchmesser hat, als der näher zum Ende der Muffe liegende Wulst 15.

Die stirnseitigen Enden 16 der Muffe sind nach innen gebogen, so dass die beidseitigen Öffnungen der Muffe enger sind, als die angrenzenden Bereiche 11.

Wie auf der linken Seite der Fig. 1 ersichtlich, befindet sich im Inneren des angrenzenden Bereichs von der Mitte her gesehen zunächst ein O-Ring 5 hinter dem inneren Wulst 14, anschliessend ein Pressring 4, an diesen anschliessend wiederum ein O-Ring 7 hinter dem zweiten Wulst 15, sodann ein zweiter Pressring 6 und schliesslich zu äusserst der Spreizring 8.

Die O-Ringe können aus Elastomer, z.B. Gummi oder aus einem anderen für Dichtungen bekannten Material bestehen. Ihr Innendurchmesser ist geringfügig grösser als der Rohraussendurchmesser, damit sie beim Einstecken der Rohrenden nicht durch allfällig vorhandene Grate verletzt und in ihrer Dichtungsfähigkeit beeinträchtigt werden.

Der innere Pressring 4 hat einen Aussendurchmesser, der dem Innendurchmesser des inneren Wulstes 14 entspricht. Der Aussendurchmesser des äusseren Pressrings entspricht dem grössten Innendurchmesser der Muffe. Beide Pressringe haben eine dem Rohraussendurchmesser entsprechende innere Weite. Die Pressringe sind im wesentlichen einfache Rohrstücke.

Im unbenutzten Zustand befinden sich alle Ringe in der angegebenen Reihenfolge im Inneren der Muffe. Da alle Innendurchmesser der Rohrweite entsprechen, kann das Rohrende ohne weiteres eingesteckt werden, bis es am Mittelbereich 9 anstösst. Danach werden mit einem geeigneten Werkzeug die Ringe axial zur Muffenmitte hin verpresst.

Bei diesem Vorgang wird der Spreizring 8 zunächst ohne Verformung nach innen geschoben und schiebt seinerseits den äusseren Pressring nach innen. Dieser wiederum schiebt den äusseren O-Ring 7, den inneren Pressring 6 und den inneren O-Ring 5 zum Mittelbereich 9. Der innere Pressring 4 beendet seine axiale Bewegung, wenn er am inneren Wulst 14 anstösst. Dies ist in Fig. 1 rechts ersichtlich. In dieser Position hat der innere Pressring 4 den inneren O-Ring 5 in den Raum zwischen Rohrende 2, Mittelbereich 9 und Wulst 14 gepresst, den dieser völlig ausfüllt.

Der äussere Pressring 6 hat gleichzeitig seine axiale Bewegung am äusseren Wulst 15 als Anschlag beendet und den äusseren O-Ring 7 derart komprimiert, dass er den zwischen den Pressringen, dem Rohrende und der Muffe verbleibenden Raum ausfüllt.

Durch den Anschlag des äusseren Pressrings 6 am äusseren Wulst 15 kann der Spreizring 8 sich nicht mehr weiter axial bewegen. Durch weiteren Pressdruck wird er deshalb aufgespreizt und verklemmt sich unter Verformung der Muffe nach aussen und des Rohrstücks nach innen. Dadurch entsteht eine sichere, unlösbare und absolut dichte Verbindung zwischen den Rohrstücken und der Muffe.

Für eine stabile Fixierung des Spreizringes sind vorteilhafterweise ringförmig umlaufende Rillen 18 in die Innenfläche der Muffe eingewalzt oder eingeformt.

Bei der in Fig. 2 gezeigten alternativen Ausführungsform ist die den Mittelbereich 9 bildende Einschnürung nicht so tief, dass ihr Innendurchmesser dem Innendurchmesser der Rohrstücke entspricht. Statt dessen ist im Inneren des Mittelbereichs 9 eine zusätzliche Hülse 17 angeordnet, deren Innendurchmesser mit dem der Rohrstücke 1, 2 identisch ist. Die Hülse 17 ist etwas länger als der Mittelbereich 9 und steht deshalb beidseitig nach aussen vor. Diese vorstehenden Enden der Hülse 17 bilden den Anschlag für die eingesteckten Rohrstücke und bilden mit ihnen zusammen einen glatten, totraumfreien Übergang, wie er z.B. für den Einsatz in der Lebensmittelindustrie erforderlich ist. Die Aussenseite des überstehenden Teils der Hülse 17 definiert gleichzeitig mit dem Pressring und der Muffe den Raum, den der innere O-Ring 5 beim Verpressen ausfüllt.

Bei dieser Ausführungsform ist nur je eine Einschnürung 13 mit dem entsprechenden innenseitigen Wulst 15 etwa halbwegs zwischen dem Mittelbereich 9 und den Enden 16 der Muffe vorgesehen.

Anstelle der Herstellung der Muffe durch Kaltverformung kann diese auch als Gussteil hergestellt werden. Dies ist vor allem von Vorteil, wenn zur Verbindung von Kunststoffrohren die Muffe als Kunststoff-Spritzgussteil hergestellt wird. Auch die Pressringe können aus Kunststoff bestehen, so dass lediglich die Spreizringe aus Federstahl bestehen.

Der Spreizring kann für die Verwendung mit einer Kunststoffmuffe vorteilhafterweise, wie in der Detailvergrösserung gezeigt, mit gezähnten Innen- und Aussenkanten versehen sein. Die Zähnungen schneiden beim Verpressen in das Kunststoffmaterial der Muffe und der Rohre ein und können somit auch Torsionskräfte aufnehmen.

## Patentansprüche

1. Vorrichtung zur Verbindung von Rohrstücken mit einer die beiden Enden der Rohrstücke umfassenden Muffe, dadurch gekennzeichnet, dass die Muffe (3) aus einem Mittelteil (9) und zwei beidseitig angrenzenden Bereichen (11) besteht und dass die angrenzenden Bereiche (11) einen die Rohrstücke umgebenden Ringspalt vorsehen, in dem von der Mitte zu den Enden (16) hin zwei hintereinander liegende O-Ring/Pressring - Kombinationen (4,5; 6,7) und ein aussen anschliessender Spreizring (8) angeordnet sind.

2. Rohrverbindungsvorrichtung nach Anspruch 1, dadurch gekennzeichnet, dass die an den Mittelbereich (9) der Muffe angrenzenden Bereiche (11) mit flachen Einschnürungen und entsprechenden nach innen gerichteten Wülsten versehen sind.

3. Rohrverbindungsvorrichtung nach Anspruch 1, dadurch gekennzeichnet, dass die Innenflächen der angrenzenden Bereiche (11) der Muffe mit umlaufenden Rillen versehen sind.
